# EUROPEAN PATENT APPLICATION

(11) **EP 4 258 653 A1**
(43) Date of publication of application: **11.10.2023**
(21) Application number: 23161713.5
(22) Date of filing: 14.03.2023
(51) Int. Cl.: H04N 7/18, B60R 1/00

(54) **IMAGE PROCESSING DEVICE THAT CAN MEASURE DISTANCE TO OBJECT, MOVABLE APPARATUS, IMAGE PROCESSING METHOD, AND STORAGE MEDIUM**

(30) Priority: 06.04.2022 JP 2022063488
(71) Applicant: CANON KABUSHIKI KAISHA, Tokyo 146-8501 (JP)
(72) Inventor: HIGASHIYAMA, Teruyuki, Tokyo, 146-8501 (JP)
(74) Representative: TBK

(57) **Abstract**

An image processing device includes an image acquisition unit that acquires an image obtained by capturing an object around a movable apparatus, a distance information acquisition unit that acquires distance information indicating a distance to the object around the movable apparatus, a first overhead view image generation unit that generates a first overhead view image from a plurality of the captured images by using the distance information, a second overhead view image generation unit that generates a second overhead view image from a plurality of the captured images without using the distance information, a movement state detection unit that detects a state of movement of at least one of the movable apparatus and the object, and a control unit that causes the first overhead view image generation unit or the second overhead view image generation unit to generate either the first overhead view image or the second overhead view image according to the state of movement.

## Description

### BACKGROUND OF THE INVENTION

### Field of the Invention

The present invention relates to an image processing device, a movable apparatus, an image processing method, a storage medium, and the like.

### Description of the Related Art

Recently, an image processing device that combines images captured by multiple cameras mounted in a vehicle to generate an overhead view image has become known. For example, Japanese Patent Application Laid-Open No. 2015-75966 describes an image processing device that displays overhead view images without distortion by using images captured by a camera and data of distance to surrounding objects measured by a distance sensor.

With respect to the above-described image processing device, the images captured by the camera need to match the data of distance to the surrounding objects measured by the distance sensor. However, in general, the timings at which the camera captured the images do not match the timing at which the distance sensor acquires the data of distance. For example, while a camera captures images of 60 frames for a second, a distance sensor can acquire a distance to an object around the vehicle, for example, in only ten rounds for a second, or the like, thus the images and the distance information are acquired at different intervals, and it is difficult to completely match timings.

For this reason, when the vehicle is moving or there is a moving object around it, the position of the object recorded in images captured by the camera does not match the position in the data of distance acquired by the distance sensor, and thus there is a problem that the object is not displayed at the correct position.

### SUMMARY OF THE INVENTION

An image processing device according to an aspect of the present invention includes at least one processor or circuit configured to function as an image acquisition unit that acquires an image obtained by capturing an object around a movable apparatus, a distance information acquisition unit that acquires distance information indicating a distance to the object around the movable apparatus, a first overhead view image generation unit that generates a first overhead view image from a plurality of the captured images by using the distance information, a second overhead view image generation unit that generates a second overhead view image from the plurality of captured images without using the distance information, a movement state detection unit that detects a state of movement of at least one of the movable apparatus and the object, and a control unit that causes the first overhead view image generation unit or the second overhead view image generation unit to generate either the first overhead view image or the second overhead view image according to the state of movement.

Further features of the present invention will become apparent from the following description of embodiments with reference to the attached drawings.

### BRIEF DESCRIPTION OF THE DRAWINGS

Fig. 1 is a diagram for describing a positional relationship between an imaging unit and a vehicle according to a first embodiment.
Fig. 2 is a functional block diagram for describing a configuration of an image processing device according to the first embodiment.
Fig. 3 is a flowchart for describing a series of operations of an integration processing unit 50 according to the first embodiment.
Figs. 4A and 4B are diagrams illustrating display examples of overhead view images of a vehicle 1 in which the vehicle is overlooked from above.
Fig. 5 is a diagram showing timings at which imaging units 21 to 24 perform imaging and timings at which a distance measurement unit 41 acquires data of distance from the vehicle 1 to surrounding objects.
Fig. 6 is a diagram illustrating an example of a position of the vehicle 1 and a position of an object 601 when the vehicle 1 is traveling.
Fig. 7 is a functional block diagram for describing a configuration of an image processing device according to a second embodiment.
Fig. 8 is a flowchart for describing a series of operations of an integration processing unit 50 according to the second embodiment.
Fig. 9 is a diagram illustrating a situation in which the vehicle 1 is stopped on the shoulder of a road with heavy traffic.
Fig. 10 is a flowchart for describing a series of operations of an integration processing unit 50 according to a third embodiment.
Fig. 11 is a flowchart for describing a series of operations of an integration processing unit 50 according to a fourth embodiment.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### (First Embodiment)

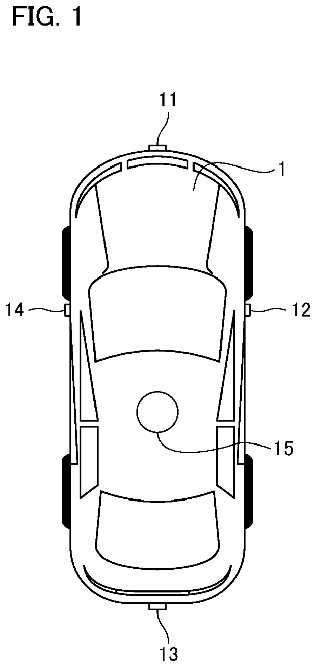

Fig. 1 is a diagram for describing a positional relationship between an imaging unit and a vehicle according to a first embodiment.

In the first embodiment, camera units 11, 12, 13, and 14 are installed at the front, right side, rear, and left side, respectively, of a vehicle 1 that is, for example, an automobile as a movable apparatus (movable apparatus body) as illustrated in Fig. 1. In addition, a distance measurement unit 15 is installed on top of the vehicle.

Further, although four camera units and one distance measurement sensor are provided in the first embodiment, the number of camera units is not limited to four, and at least one camera unit may be provided. In addition, the number of distance measurement units is not limited to one either, and at least one distance measurement unit may be provided.

Further, since the camera units 11 to 14 perform imaging having sides to the front, right, left, and rear of the vehicle 1 serving as a movable apparatus as predetermined imaging ranges, each of the camera units has an image sensor that captures an optical image and an optical system that forms an optical image on the light-receiving surface of the image sensor.

Further, in the first embodiment, each of the optical systems of the camera units 11 to 14 has common optical characteristics and each of the image sensors has the same number of pixels. However, optical characteristics of the optical systems and the number of pixels of the image sensors of some camera units may be different from optical characteristics of the optical systems and the number of pixels of the image sensors of the other camera units.

Further, in the first embodiment, the camera units 11 and 13 are installed such that optical axes of the optical systems thereof are substantially horizontal when the vehicle 1 is on a horizontal plane, and the camera units 12 and 14 are installed such that optical axes of the optical system thereof face slightly downward from the horizontal, or face straight downward. Alternatively, the optical systems of the camera units 11 to 14 used in the first embodiment include a fisheye lens or a wide-angle lens with which a wide range of the surroundings can be captured.

The distance measurement unit 15 is a distance measurement unit for measuring the distance to a target object, and, for example, of a Light Detection And Ranging (LiDAR) method or a Time Of Flight (TOF) method in which a distance is calculated from the time taken to receive reflected light from an illuminated target object or the phase of reflected light.

In other words, a distance information acquisition unit 51b is configured to acquire distance information indicating the distance to a surrounding object measured in the LiDAR method or TOF method.

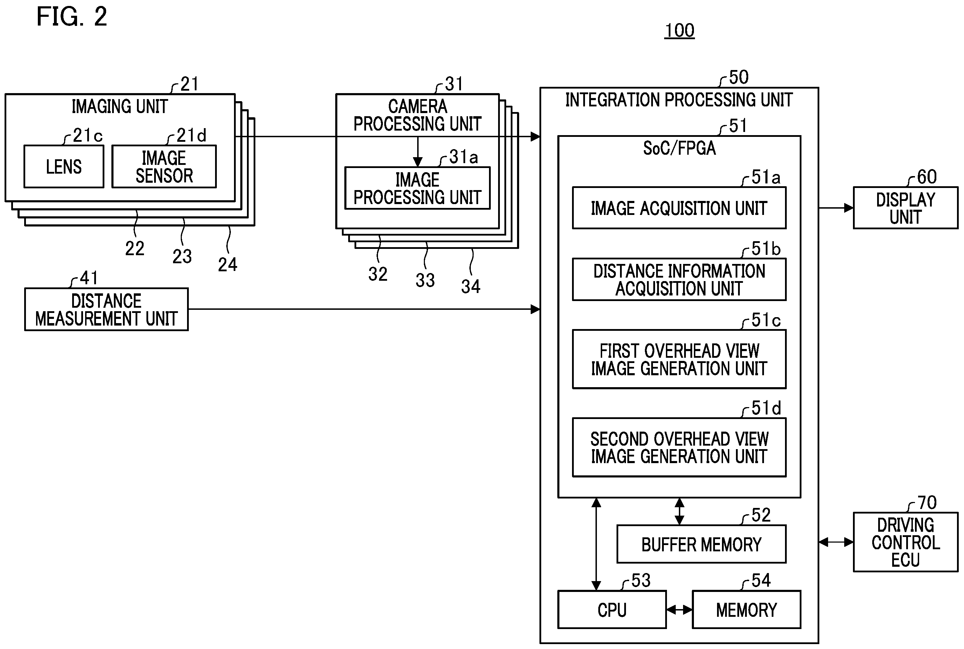

Fig. 2 is a functional block diagram for describing a configuration of an image processing device or the like according to the first embodiment. Further, some of the functional blocks illustrated in Fig. 2 are realized by causing a CPU 53 serving as a computer included in an integration processing unit 50 to execute a computer program stored in a memory 54 serving as a storage medium.

However, some or all of the functional blocks may be realized as hardware. As hardware, a dedicated circuit (ASIC), a processor (a reconfigurable processor or DSP), or the like can be used. Alternatively, the functional blocks illustrated in Fig. 2 may not be built into the same housing, or may be configured as individual devices connected to each other via a signal path.

The image processing device 100 in Fig. 2 is mounted in the vehicle 1 serving as a movable apparatus and includes at least an integration processing unit 50. Imaging units 21 to 24 are disposed in the housings of camera units 11 to 14, respectively. The imaging units 21 to 24 include lenses 21c to 24c serving as optical systems and image sensors 21d to 24d, for example, CMOS image sensors, CCD image sensors, or the like, respectively.

Each of the lenses 21c to 24c serving as optical systems is formed of at least one or more optical lenses, and forms an optical image on the light-receiving surface of each of the image sensors 21d to 24d. The image sensors 21d to 24d function as imaging units and photoelectrically convert an optical image to output an imaging signal. RGB color filters, for example, are arrayed for each pixel on the light-receiving surfaces of the image sensors 21d to 24d. The array of RGB is, for example, a Bayer array.

Thus, the image sensors sequentially output R, G, R, and G signals from, for example, a predetermined row in accordance with the Bayer array and sequentially output G, B, G, and B signals from a neighboring row.

Reference numerals 31 to 34 represent camera processing units which are accommodated in the same housings of the same camera units 11 to 14 together with the imaging units 21 to 24, respectively, and process each of imaging signals output from the imaging units 21 to 24. Further, in Fig. 2, details of the imaging unit 24 and the camera processing unit 34 and wiring thereof are omitted for the sake of convenience.

The camera processing units 31 to 34 have image processing units 31a to 34a, respectively. The image processing units 31a to 34a process the imaging signals output from the imaging units 21 to 24, respectively. Further, part or all functions of the camera processing units 31 may be performed by signal processing units stacked inside the image sensors 21d to 24d.

Specifically, the image processing units 31a to 34a perform debayer processing on each piece of image data input from the imaging units 21 to 24 in accordance with the Bayer array and converts the result into image data in an RGB raster format. Furthermore, the image processing units perform various kinds of correction processing such as white balance adjustment, gain/offset adjustment, gamma processing, color matrix processing, lossless compression processing, and the like. However, in the first embodiment, a so-called raw image signal is formed, without performing lossy compression processing, or the like.

Further, the camera processing units 31 to 34 include a CPU serving as a computer and a memory serving as a storage medium storing computer programs therein. In addition, the CPU executes the computer programs stored in the memory to control each of the camera processing units 31 to 34.

Further, in the first embodiment, the image processing units 31a to 34a use hardware, for example, a dedicated circuit (ASIC), a processor (a reconfigurable processor or DSP), or the like. With this configuration, image recognition in high-definition areas can be achieved at a high speed, and thus chances of avoiding accidents can be increased. Further, the image processing units 31a to 34a may have a distortion correction function to correct distortion of each of the lenses 21c to 24c.

Further, although some or all of the functional blocks included in the camera processing units 31 to 34 may be realized by causing the CPU to execute the computer programs stored in the memory, in that case, it is desirable to raise the processing speed of the CPU.

Reference numeral 41 represents a distance measurement unit, which is accommodated in the housing of the distance measurement unit 15 and constituted by a LiDAR- or TOF-type distance sensor. The distance measurement unit 41 is mounted in a rotation mechanism that rotates 10 times per second, for example, and can periodically acquire distance information indicating a distance from the vehicle 1 to an object that is present in the range of 360 degrees around the vehicle 1.

Reference numeral 50 represents an integration processing unit, which includes a System-On-Chip (SOC)/Field Programmable Gate Array (FPGA) 51, a buffer memory 52, a CPU 53 as a computer, and a memory 54 as a storage medium.

In addition, the integration processing unit 50 may have a processor such as a GPU that is specialized for image processing. The CPU 53 executes computer programs stored in the memory 54 to perform various kinds of control over the image processing device 100 as a whole.

Further, the integration processing unit 50 is accommodated in a separate housing from the camera units in the first embodiment. Further, although the integration processing unit 50 and a display unit 60 are mounted in the vehicle 1 as a movable apparatus in the first embodiment, the integration processing unit and the display unit may be disposed at a position away from the movable apparatus, and in that case, the multiple camera units 11 to 14 are connected to the distance measurement unit 41 through a communication unit.

In addition, images from the camera units 11 to 14 and distance data from the distance measurement unit 41 are acquired through the communication unit to generate and display an overhead view image. Furthermore, bidirectional communication is performed with a driving control ECU serving as a movement control unit through the communication unit.

The SOC/FPGA 51 includes an image acquisition unit 51a, a distance information acquisition unit 51b, a first overhead view image generation unit 51c, and a second overhead view image generation unit 51d. The first overhead view image generation unit 51c generates a first overhead view image obtained by using distance information, and the second overhead view image generation unit generates a second overhead view image obtained without using distance information.

The image acquisition unit 51a acquires raw image signals from the camera processing units 31 to 34 and stores the signals in the buffer memory 52. The image acquisition unit 51a reads the raw image signals at 60 frames, for example, per second. Further, the image acquisition unit 51a performs an image acquisition step of acquiring images obtained by the multiple camera units disposed on the movable apparatus capturing the surroundings of the movable apparatus.

A cycle in which the image acquisition unit 51a reads raw image signals is determined based on the specifications of the image sensors 21d to 24d. It is assumed in the first embodiment that a maximum of 60 frames from the image sensors 21d to 24d can be read per second and four images from the camera processing units 31 to 34 are read at the same time for every 16.6 msec (which is equal to one second/60 frames).

The distance information acquisition unit 51b acquires distance data from the distance measurement unit 41 and stores the data in the buffer memory 52. The distance information acquisition unit 51b reads the distance data of 360 degrees around the vehicle 1 for ten rounds per second. In other words, the distance information acquisition unit 5 1b performs a distance information acquisition step of acquiring distance information indicating the distance to an object around the movable apparatus.

The cycle in which the distance information acquisition unit 51b reads distance data is determined according to the specification of the distance measurement unit 41, reading of ten rounds per second is assumed to be possible in the first embodiment. In other words, it takes 100 msec to acquire one round of data.

In addition, distance measurement data of one round (360 degrees) of the vehicle 1 is not sent at once, but distance measurement data of one round is sent, for example, 21701 divided times. For this reason, the distance information acquisition unit 51b stores data of 0.166 degrees (= 360 ÷ 21701) for every 46.08 microseconds (= one second ÷ 10 rounds ÷ 21701 times) in the buffer memory 52.

The amount of distance data stored in the buffer memory 52 is one round of the vehicle 1 + α (e.g., data of 1.2 rounds, etc.), and old data is overwritten by using a ring buffer, or the like.

The first overhead view image generation unit 51c reads the image data acquired by the image acquisition unit 51a from the buffer memory 52 and the distance data acquired by the distance information acquisition unit 51b and then generates a first overhead view image with no distortion by using distance information.

In other words, the first overhead view image generation unit 51c generates the first overhead view image from the multiple captured images using the distance information. An overhead view image is generated at every timing at which the image acquisition unit 51a has read image data of one frame period from the camera processing units 31 to 34.

At that time, the first overhead view image is generated by using the four pieces of image data acquired from the camera processing units 31 to 34 and the distance measurement data (distance information) of the recent one round. In addition, since an overhead view image is created each time reading of image data of one frame period from the camera processing units 31 to 34 is completed, the first overhead view image generation unit 51c generates one first overhead view image for every 16.6 msec by using the distance information.

The second overhead view image generation unit 51d only reads the image data acquired by the image acquisition unit 51a from the buffer memory 52 and then generates a second overhead view image without using distance information. Here, the second overhead view image generation unit 51d functions as a second overhead view image generation means that generates a second overhead view image from the multiple captured images without using distance information.

Because no distance data is used at that time, an overhead view image with great distortion is generated. In addition, one second overhead view image is generated for every 16.6 msec without using distance information, similarly to the first overhead view image generation unit 51c.

Reference numeral 60 represents a display unit, for example, a liquid crystal display, or the like, and the display unit is installed, for example, around the operation panel near the center of the front of the driver's seat of the vehicle 1 in the vehicle width direction. The overhead view images generated by the first overhead view image generation unit 51c and the second overhead view image generation unit 51d are displayed on the display unit 60. Further, the display unit 60 may be provided at a position away from the movable apparatus as described above.

Reference numeral 70 represents a driving control ECU mounted in the vehicle 1, which is a unit in which a computer and a memory for comprehensively performing drive control, direction control, and the like of the vehicle 1 are built.

The integration processing unit 50 acquires, as vehicle control signals from the driving control ECU 70, information and the like about driving of the vehicle (state of movement), for example, a driving speed, a driving direction, states of the shift lever, shift gear, turn indicator, a direction of the vehicle indicated by a geomagnetic sensor, and the like. Further, the driving control ECU 70 functions as a movable apparatus control unit that controls movement of the vehicle 1 as a movable apparatus based on the information from the integration processing unit 50, and the like.

Furthermore, the integration processing unit 50 functions as a movement state detection unit that performs a movement state detection step of acquiring a state of movement such as a movement speed of the movable apparatus from the driving control ECU 70.

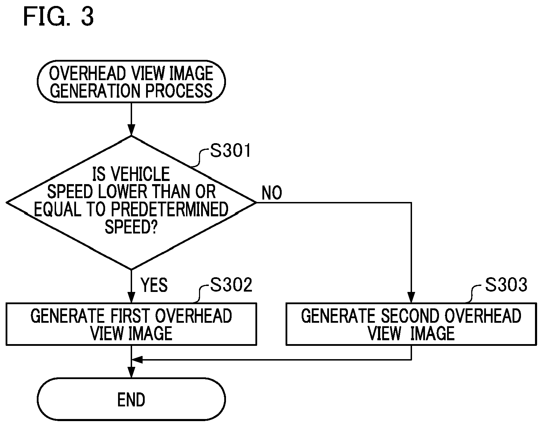

Fig. 3 is a flowchart for describing a series of operations of the integration processing unit 50 according to the first embodiment. The flow of Fig. 3 is sequentially performed by the CPU 53 of the integration processing unit 50 performing a computer program stored in the memory 54.

In step S301, the CPU 53 determines whether a current driving speed of the vehicle 1 is lower than or equal to a predetermined speed. The driving speed is received from the driving control ECU 70. In addition, communication with the driving control ECU 70 is performed through a communication unit, which is not illustrated, provided inside by using a protocol such as Controller Area Network (CAN), FlexRay, or Ethernet (registered trademark).

If the vehicle speed of the vehicle 1 is determined to be lower than or equal to the predetermined speed in step S301, the CPU 53 transitions to step S302 to cause the first overhead view image generation unit 51c to generate a first overhead view image using distance information. An overhead view image with no distortion thereby can be generated. Here, step S302 functions as a first overhead view image generation step of generating a first overhead view image from multiple captured images by using the distance information.

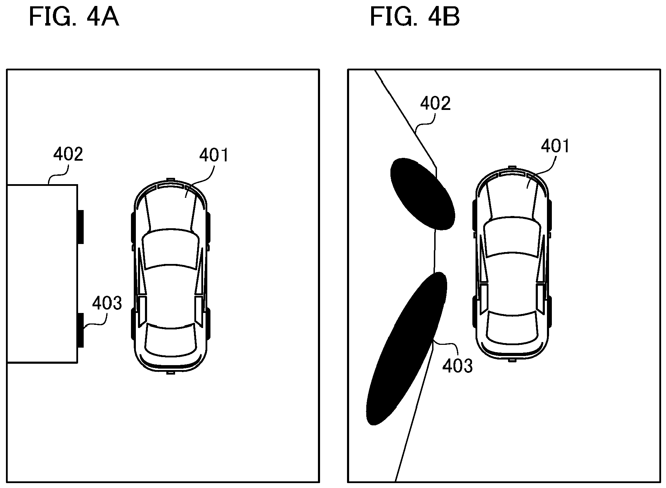

Figs. 4A and 4B are diagrams illustrating display examples of overhead view images of the vehicle 1 in which the vehicle is overlooked from above. Fig. 4A is a diagram illustrating a display example when a first overhead view image is generated by using distance information, and Fig. 4B is a diagram illustrating a display example when a second overhead view image is generated without using distance information.

Reference numeral 401 represents an icon indicating the vehicle 1, reference numeral 402 represents another vehicle stopping next to the vehicle 1, and reference numeral 403 represents a rear tire of the other vehicle 402. In the first overhead view image generated using distance information illustrated in Fig. 4A, the other vehicle 402 and the rear tire 403 are displayed in a form with no (little) distortion. On the other hand, in the second overhead view image generated without using distance information illustrated in Fig. 4B, the other vehicle 402 and the rear tire are displayed with significant distortion.

If the vehicle speed of the vehicle 1 is determined to higher than the predetermined speed in step S301, the CPU 53 transitions to step S303 to cause the second overhead view image generation unit 51d of Fig. 2 to generate a second overhead view image. Thus, an overhead view image with significant distortion of nearby subjects is generated as illustrated in Fig. 4B. Further, step S303 functions as a second overhead view image generation step of generating a second overhead view image from multiple captured images without using distance information.

As described above, the first overhead view image generation unit generates the first overhead view image if the movement speed of the movable apparatus is lower than or equal to the predetermined speed, and the second overhead view image generation unit generates the second overhead view image if the movement speed is higher than the predetermined speed in steps S301 to S303.

Here, steps S301 to S303 function as a control step (control unit) of generating either a first overhead view image or a second overhead view image in the first overhead view image generation step or the second overhead view image generation step according to the state of movement of the movable apparatus.

Further, although the predetermined speed used to determine a vehicle speed in step S301 is set to, for example, 10 km/h, or the like, it is not limited to that value. However, when the vehicle 1 is traveling at a relatively high speed and a first overhead view image is generated by using distance information, surrounding objects are not displayed at correct positions, and for this reason, the predetermined speed in step S301 is desirably set to a relatively low speed (e.g., a speed at which the vehicle is regarded as being slow).

Because distance information used for generating a first overhead view image is distance information acquired zero to 100 msec before the time of image capturing, the overhead view image is significantly distorted or partially missing as the vehicle speed increases. Further, if the vehicle speed is relatively high, distortion of subjects near the vehicle is relatively negligible.

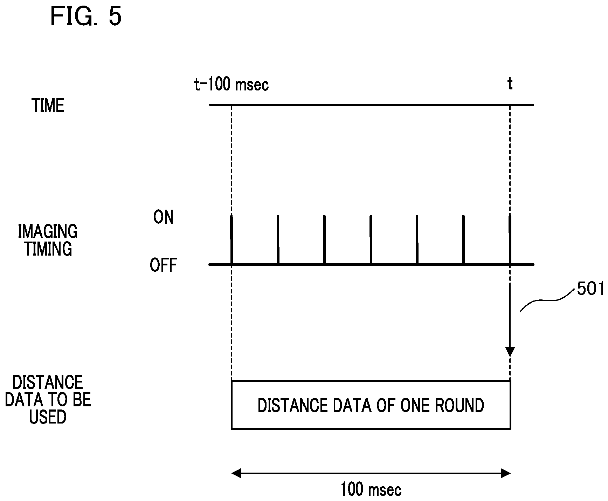

Fig. 5 is a diagram showing timings at which the imaging units 21 to 24 perform imaging and timings at which the distance measurement unit 41 acquires data of distance from the vehicle 1 to surrounding objects. It takes 100 msec for the distance information acquisition unit 51b to acquire the distance information of objects in 360 degrees around the vehicle 1 as described above with reference to Fig. 2, and thus the first overhead view image is generated by using the distance data (distance information) acquired zero to 100 msec before the time of image capturing.

The cycle in which captured images are acquired is different from the cycle in which the distance information is acquired as described above. Thus, when the first overhead view image is generated from the image captured at a time t indicated by reference numeral 501, the overhead view image is generated with reference to the distance data acquired in the period from [time t - 100 msec] to the time t. In other words, the time at which the images were captured does not completely match the time the distance data was acquired.

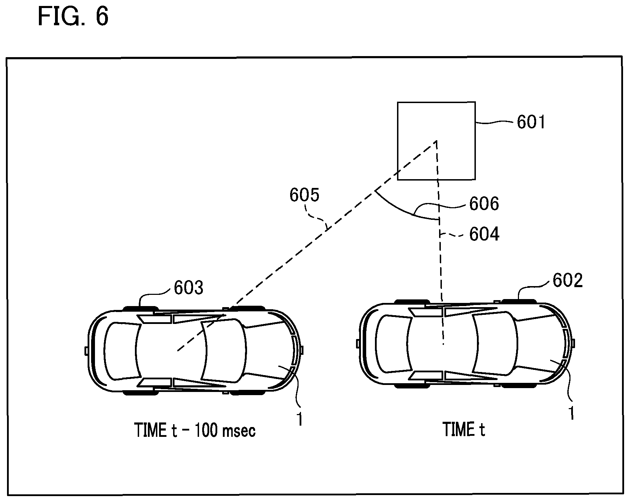

Fig. 6 is a diagram illustrating an example of a position of the vehicle 1 and a position of an object 601 when the vehicle 1 is traveling. While the vehicle 1 is traveling at a position 602 when the imaging units 21 to 24 perform imaging at a time t, the vehicle 1 is traveling at a position 603 at [time t - 100 msec] that is the time to start acquiring distance data to be referred to for generating a first overhead view image.

Reference numeral 604 represents a line indicating the distance and direction from the vehicle 1 to the object 601 at the time t at which the vehicle 1 is traveling at the position 602, and reference numeral 605 represents a line indicating the distance and direction from the vehicle 1 to the object 601 at [time t - 100 msec] at which the vehicle 1 is traveling at the position 603.

It can be seen that there is a difference in distance and direction from the vehicle 1 to the object 601 because the lines 603 and 604 are different in length and have an angle 606.

In addition, the vehicle 1 moves a longer distance for 100 msec as the vehicle speed of the vehicle 1 becomes higher, and thus there will a greater difference in position of the vehicle and distance to the object when imaging is performed and when measurement is performed, and thus the object 601 is not displayed at a correct position when the first overhead view image is displayed. For this reason, it is desirable to set the predetermined speed for the determination of step S301 to a low speed, for example, 10 km/h, or the like.

There is no significant change in distance to the object 601 and position of the vehicle during imaging and during measurement when the vehicle 1 is traveling at a low speed or when the vehicle 1 is stopped, and thus the object is displayed at a correct position when the first overhead view image obtained by using distance information is displayed.

According to the first embodiment, when the vehicle is traveling at as a high speed as the vehicle will be significantly affected by asynchronization between the cameras and the distance sensor, a second overhead view image is generated without using distance data. Therefore, an overhead view image in which objects are displayed at relatively correct positions can be generated.

On the other hand, when the vehicle is traveling at as a relatively low speed as the vehicle will be little affected by asynchronization between the cameras and the distance sensor, a first overhead view image is generated by using the distance information, and thus an overhead view image in which a distance to an object near the vehicle can be easily found can be displayed without distortion in the object.

### [Second Embodiment]

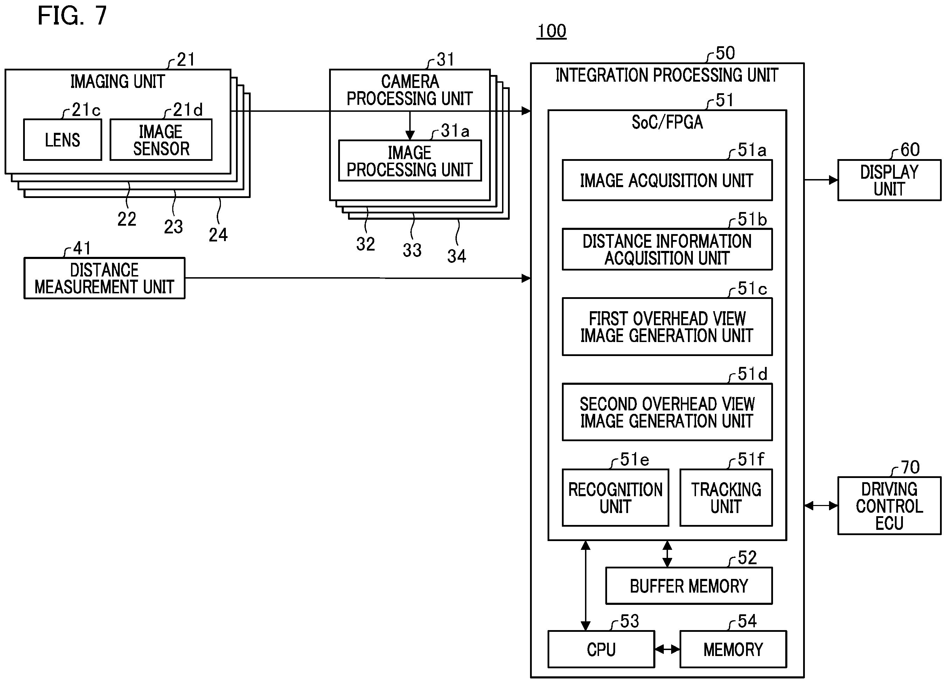

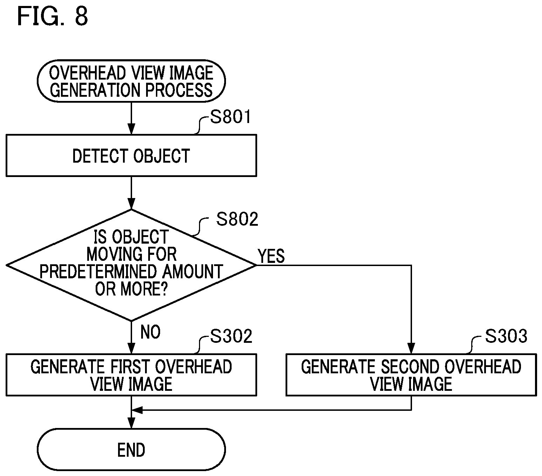

Next, a second embodiment will be described below using Figs. 7 and 8. Fig. 7 is a functional block diagram for describing a configuration of an image processing device according to the second embodiment.

The functional block diagram of the second embodiment has a difference from that of Fig. 2 described in the first embodiment in that a recognition unit 51e and a tracking unit 51f are added. The recognition unit 51e recognizes images captured by the imaging units 21 to 24 and detects objects in the images.

Further, the recognition unit 51e here functions as a movement state detection unit that detects a state of movement of an object around the movable apparatus, and also functions as an image recognition unit that acquires a speed of relative movement of an object to the movable apparatus. The tracking unit 51f tracks the recognized object and specifies a position thereof.

Fig. 8 is a flowchart for describing a series of operations of the integration processing unit 50 according to the second embodiment. The flow of Fig. 8 is sequentially performed by the CPU 53 of the integration processing unit 50 performing a computer program stored in the memory 54.

In step S801, the CPU 53 causes the recognition unit 51e to detect an object in images captured by the imaging units 21 to 24. In other words, the recognition unit 51e detects cars, motorcycles, people, signals, signs, road white lines, light rays, and the like through image recognition. At this time, the recognition unit detects the sizes of the objects on the images and position information thereof along with the types of the detected objects in units of pixels and stores the detection results in the memory 54.

Next, the CPU 53 proceeds to step S802 to cause the tracking unit 51f to track the objects detected in step S801. The tracking unit 51f specifies the positions of the objects detected in step S801 based on the images captured by the imaging units 21 to 24.

Then, the position information of each of the specified objects is stored in the memory 54 each time an image of one frame thereof is captured, the position of the object is compared with that at the time of capturing of the previous frame, and thus it is determined whether the object detected in step S801 has moved for a predetermined amount or more. Further, for the object detection of step S801 and object tracking of step S802, for example, "OpenCV" that is an opensource library developed by Intel Corporation may be used.

If the object has not moved for a predetermined amount or more in the images, the CPU 53 transitions to step S302 to cause the first overhead view image generation unit 51c to generate a first overhead view image using distance information.

On the other hand, if the object has moved for a predetermined amount or more in step S802, the CPU 53 transitions to step S303 to cause the second overhead view image generation unit 51d to generate a second overhead view image without using distance information.

In the second embodiment, when asynchronization between the cameras and the distance sensor around the vehicle 1 has significant influence and a movable apparatus moving at a relatively high speed is detected through image recognition, the second overhead view image generation unit 51d generates a second overhead view image without using distance information as described above. Therefore, it is possible to prevent an overhead view image in which the movable apparatus is not displayed at a correct position from being generated.

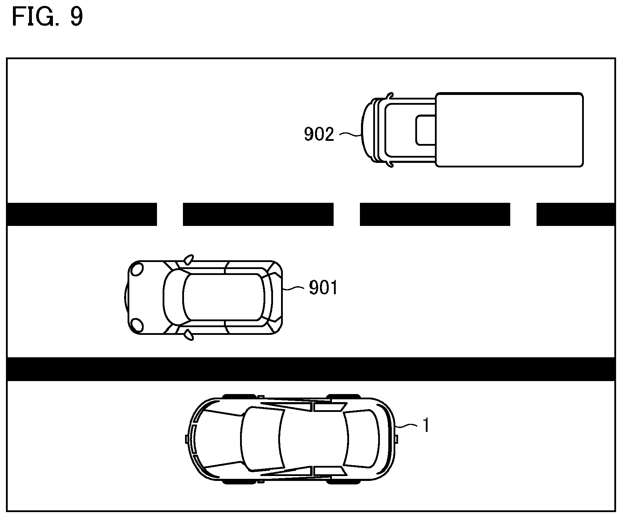

Fig. 9 is a diagram illustrating a situation in which the vehicle 1 is stopped on the shoulder of a road with heavy traffic. When, for example, movable apparatuses such as other vehicles 901 and 902 are traveling at a high speed right next to the vehicle 1 stopping on the shoulder of a road with heavy traffic as illustrated in Fig. 9, the second overhead view image generation unit 51d generates a second overhead view image without using distance information.

In addition, the object detected in step S801 is a fixed object, for example, a sign, a signal, or the like, if the amounts of movement of the object are determined in step S802, it is possible to determine whether the vehicle 1 is moving at a relatively high speed to the fixed object.

A case in which a position of a signal or a sign that is fixed to a road and will not move is moved for a predetermined amount or more each time an image is imported, for example, means that the vehicle 1 is traveling relatively.

Although a vehicle speed is acquired from the driving control ECU 70 of Fig. 2 in order to determine a vehicle speed of the vehicle 1 in the first embodiment, a state of traveling of the vehicle 1 is determined based on images in the second embodiment, and thus there is no need to acquire a vehicle speed from the driving control ECU 70. Thus, it is possible to provide an overhead view image processing device that disposes the object at a correct position in images even when a vehicle is moving with a simpler configuration than in the first embodiment.

### [Third Embodiment]

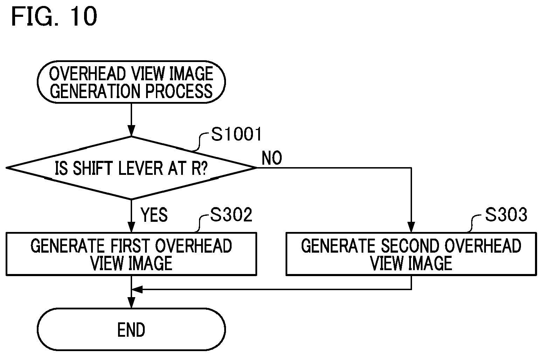

Fig. 10 is a flowchart for describing a series of operations of the integration processing unit 50 according to a third embodiment. The flow of Fig. 10 is sequentially performed by the CPU 53 of the integration processing unit 50 performing a computer program stored in the memory 54.

In step S1001, the CPU 53 determines whether the shift lever of the vehicle 1 is placed at the R (reverse) position. The position of the shift lever is received from the driving control ECU 70.

If the shift lever of the vehicle 1 is placed at the R position in step S1001, the CPU 53 transitions to step S302 to cause the first overhead view image generation unit 51c to generate a first overhead view image. In other words, if the movement direction of the vehicle 1 serving as a movable apparatus is detected as the backward direction, the vehicle does not travel at high speeds, and thus a first overhead view image with which the distances to objects can be easily estimated with no distortion in the shapes of the objects is generated.

On the other hand, if the shift lever of the vehicle 1 is placed at a position other than the R position in step S1001, the CPU 53 transitions to step S303 to cause the second overhead view image generation unit 51d to generate a second overhead view image.

Further, if the vehicle speed of the vehicle 1 is higher than a predetermined value in step S1101 even if the shift lever is placed at the R position, in step S303, the CPU 53 causes the second overhead view image generation unit 51d of Fig. 2 to generate a second overhead view image.

### [Fourth Embodiment]

A fourth embodiment is an embodiment in which the first to third embodiments are combined.

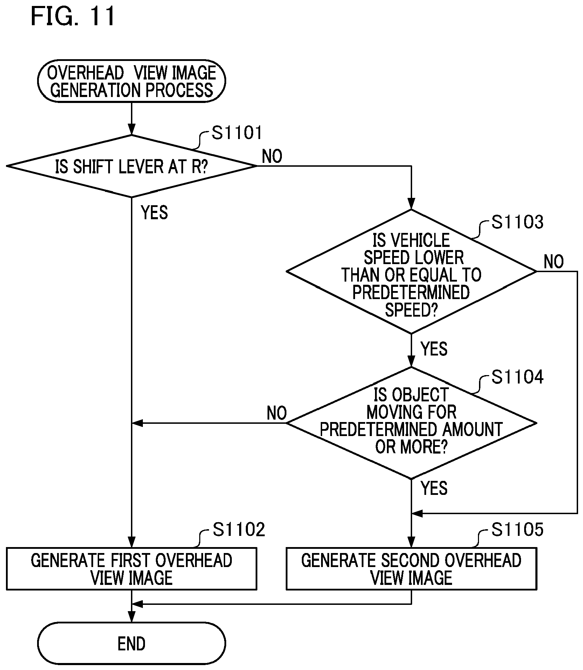

Fig. 11 is a flowchart for describing a series of operations of the integration processing unit 50 according to the fourth embodiment. The flow of Fig. 11 is sequentially performed by the CPU 53 of the integration processing unit 50 performing a computer program stored in the memory 54.

In step S1101, the CPU 53 determines whether the shift lever of the vehicle 1 is placed at the R (reverse) position. If the answer to step S1101 is yes, the CPU 53 transitions to step S1102 to cause the first overhead view image generation unit 51c to generate a first overhead view image.

On the other hand, if the shift lever of the vehicle 1 is placed at a position other than the R position in step S1101, the CPU 53 transitions to step S1103 to determine whether the vehicle speed of the vehicle 1 is lower than or equal to a predetermined speed.

If the answer to step S1103 is yes, the CPU 53 transitions to step S1104, and if the answer is no, the CPU 53 transitions to step S1105 to cause the second overhead view image generation unit 51d to generate a second overhead view image.

In step S1104, the CPU 53 determines whether an object has moved for a predetermined amount or more, and if the answer is yes, the CPU 53 transitions to step S1105, and if the answer is no, the CPU 53 transitions to step S1102 to cause a first overhead view image to be generated. Although control is performed in combination of the first to third embodiments in the fourth embodiment as described above, the invention is not limited to this combination.

Further, an example in which an image processing device is connected to a movable apparatus such as a vehicle has been described in the above-described embodiments. However, such a movable apparatus in the embodiments is not limited to a vehicle such as an automobile, and it may be any movable apparatus as long as it moves such as a train, a ship, an airplane, a robot, or a drone.

In addition, the image processing device in the embodiments may be connected to or mounted in such a movable apparatus, or may not be mounted. In addition, the configurations of the embodiments can be applied even to a case in which, for example, a movable apparatus is controlled with a remote controller based on an image or the like displayed on the display unit 60.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions. In addition, the above-described embodiments may be appropriately combined.

In addition, as a part or the whole of the control according to the embodiments, a computer program realizing the function of the embodiments described above may be supplied to the image processing device through a network or various storage media. Then, a computer (or a CPU, an MPU, or the like) of the image processing device may be configured to read and execute the program. In such a case, the program and the storage medium storing the program configure the present invention.

This application claims the benefit of Japanese Patent Application No. 2022-063488, filed on April 6, 2022, which is hereby incorporated by reference herein in its entirety.

An image processing device includes an image acquisition unit that acquires an image obtained by capturing an object around a movable apparatus, a distance information acquisition unit that acquires distance information indicating a distance to the object around the movable apparatus, a first overhead view image generation unit that generates a first overhead view image from a plurality of the captured images by using the distance information, a second overhead view image generation unit that generates a second overhead view image from a plurality of the captured images without using the distance information, a movement state detection unit that detects a state of movement of at least one of the movable apparatus and the object, and a control unit that causes the first overhead view image generation unit or the second overhead view image generation unit to generate either the first overhead view image or the second overhead view image according to the state of movement.

## Claims

1. An image processing device comprising:
at least one processor or circuit configured to function as
an image acquisition unit configured to acquire an image obtained by capturing an object around a movable apparatus;
a distance information acquisition unit configured to acquire distance information indicating a distance to the object around the movable apparatus;
a first overhead view image generation unit configured to generate a first overhead view image from the plurality of captured images by using the distance information;
a second overhead view image generation unit configured to generate a second overhead view image from a plurality of the captured images without using the distance information;
a movement state detection unit configured to detect a state of movement of at least one of the movable apparatus and the object; and
a control unit configured to cause the first overhead view image generation unit or the second overhead view image generation unit to generate either the first overhead view image or the second overhead view image according to the state of movement.

2. The image processing device according to claim 1,
wherein the control unit causes the first overhead view image generation unit to generate the first overhead view image if a movement speed of the movable apparatus or the object is lower than a predetermined speed and causes the second overhead view image generation unit to generate the second overhead view image if the movement speed is higher than the predetermined speed.

3. The image processing device according to claim 1,
wherein the movement state detection unit acquires a movement speed of the movable apparatus from a movement state control unit configured to control movement of the movable apparatus.

4. The image processing device according to claim 1,
wherein the movement state detection unit includes an image recognition unit configured to acquire a relative movement speed of the object with respect to the movable apparatus.

5. The image processing device according to claim 1,
wherein the control unit causes the first overhead view image generation unit to generate the first overhead view image if the movement state detection unit detects that a movement direction of the movable apparatus is a backward direction.

6. The image processing device according to claim 1,
wherein the image acquisition unit acquires the captured image from a plurality of camera units disposed in the movable apparatus.

7. The image processing device according to claim 1,
wherein the distance information acquisition unit acquires the distance information indicating the distance to the object measured by a LiDAR or a TOF.

8. The image processing device according to claim 1,
wherein a cycle in which the captured image is acquired is different from a cycle in which the distance information is acquired.

9. A movable apparatus on which is mounted at least one processor or circuit configured to function as:
an image acquisition unit configured to acquire an image obtained by capturing an object around a movable apparatus;
a distance information acquisition unit configured to acquire distance information indicating a distance to the object around the movable apparatus;
a first overhead view image generation unit configured to generate a first overhead view image from the plurality of captured images by using the distance information;
a second overhead view image generation unit configured to generate a second overhead view image from a plurality of the captured images without using the distance information;
a movement state detection unit configured to detect a state of movement of at least one of the movable apparatus and the object;
a control unit configured to cause the first overhead view image generation unit or the second overhead view image generation unit to generate either the first overhead view image or the second overhead view image according to the state of movement;
a plurality of camera units configured to acquire the captured images;
a distance measurement unit configured to acquire the distance information indicating the distance to the object around the movable apparatus; and
a movement control unit configured to control movement of the movable apparatus.

10. An image processing method comprising:
acquiring an image obtained by capturing an object around a movable apparatus;
acquiring distance information of indicating distance to the object around the movable apparatus;
detecting a state of movement of at least one of the movable apparatus and the object; and
performing one of the following processing operations according to the state of movement:
i) generating a first overhead view image from a plurality of the captured images by using the distance information; and
ii) generating a second overhead view image from a plurality of the captured image without using the distance information.

11. A non-transitory computer-readable storage medium storing a program for causing a computer to execute an image processing method, the image processing method comprising:
acquiring an image obtained by capturing an object around a movable apparatus;
acquiring distance information of indicating distance to the object around the movable apparatus;
detecting a state of movement of at least one of the movable apparatus and the object; and
performing one of the following processing operations according to the state of movement:
i) generating a first overhead view image from the plurality of captured images by using the distance information; and
ii) generating a second overhead view image from a plurality of the captured image without using the distance information.
